Europäisches Patentamt

European Patent Office

Office européen des brevets

(19)

(11) **EP 1 564 077 A1**

(12) **EUROPÄISCHE PATENTANMELDUNG**

(43) Veröffentlichungstag:
**17.08.2005 Patentblatt 2005/33**

(51) Int Cl.⁷: **B60R 16/02**

(21) Anmeldenummer: **04003413.4**

(22) Anmeldetag: **16.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **catem DEVELEC GmbH**
**76863 Herxheim (DE)**

(72) Erfinder: **Uhl, Günter, Dr.**
**74921 Helmstadt-Bargen (DE)**

(74) Vertreter: **Grünecker, Kinkeldey,**
**Stockmair & Schwanhäusser Anwaltssozietät**
**Maximilianstrasse 58**
**80538 München (DE)**

(54) **Elektronischer Stromverteiler für ein Kraftfahrzeug-Bordnetz**

(57)     Die vorliegende Erfindung betrifft einen elektronischer Stromverteiler (210) für ein Kraftfahrzeug-Bordnetz zur steuerbaren elektrischen Verbindung wenigstens eines Lastkreises mit dem Bordnetz. Der elektronische Stromverteiler (210) umfaßt eine Überwachungseinrichtung zur Überwachung des in den Lastkreis fließenden Stroms und zur Unterbrechung der elektrischen Verbindung, sobald der überwachte Strom einen vorgegebenen Wert überschreitet. Halbleiterschalter (410) werden zum Trennen der elektrischen Verbindung sowie zum Erfassen der Stromstärke verwendet.

Fig. 3

EP 1 564 077 A1

**Beschreibung**

Die Erfindung betrifft einen elektronischen Stromverteiler für ein Kraftfahrzeug-Bordnetz. Insbesondere betrifft die Erfindung ein neuartiges Kraftfahrzeug-Bordnetz mit einer zusätzlich zu der Batterie vorgesehenen Energiespeichereinrichtung.

Ein Kraftfahrzeugbordnetz versorgt eine Vielzahl von Steuergeräten und Signalkomponenten in einem Kraftfahrzeug mit Strom. Der Strom wird entweder einer Batterie als Energiespeicher oder, beim Betrieb des Kraftfahrzeugmotors, einem Generator entnommen. Über Relais oder einen elektronischen Stromverteiler mit Halbleiterschaltern kann eine Vielzahl einzelner Anwendungen über individuelle Laststromkreise mit Strom aus dem Kraftfahrzeug-Bordnetz versorgt werden.

Herkömmliche Bordnetze mit einer Spannung von 14 V basieren auf einer Batteriespannung von 12 Volt. Zukünftige Bordnetze sind mit einer 36 Volt-Batterie ausgestattet. Für eine Übergangszeit, in der eine Umstellung von einem 14 Volt auf ein 42 Volt-System stattfindet, werden beide Systeme parallel in einem Kraftfahrzeug eingesetzt.

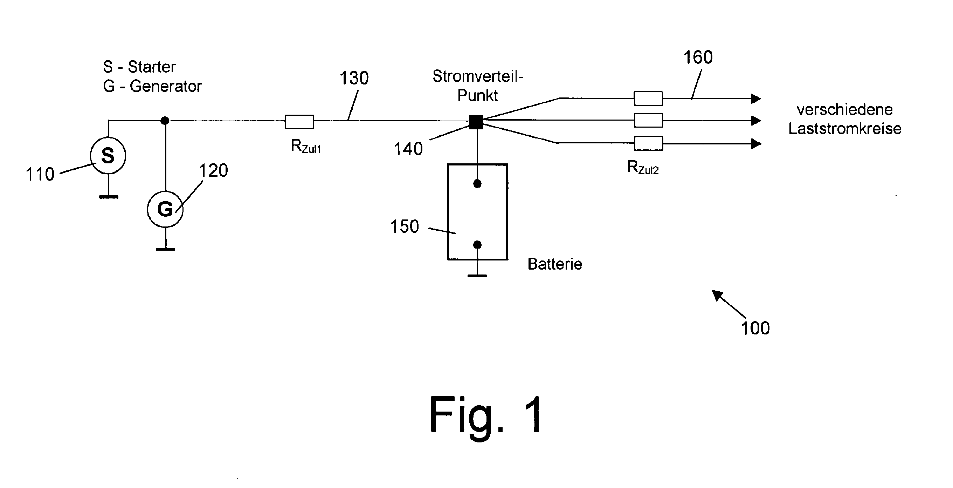

Eine schematische Darstellung eines konventionell aufgebauten Kraftfahrzeug-Bordnetzes ist in Fig. 1 dargestellt. In dem abgebildeten Bordnetz 100 sind ein Generator 120, eine Batterie 150 und ein Starter 110 parallel geschaltet. Im Allgemeinen beträgt die Leitungslänge 130 zwischen dem Generator 120 und dem Starter 110 einerseits und der Batterie 150 andererseits jeweils etwa 1 m. Dabei sind Starter und Generator am Motorblock angeordnet und jeweils über ein kurzes Kabel miteinander verbunden. Aufgrund von Schwankungen des vom Generator bereitgestellten Stroms und zur Übertragung des Starterstroms beträgt der Leitungsquerschnitt in etwa 25 mm².

Über einen herkömmlichen Stromverteilpunkt oder Stromverteiler 140 wird der Strom verschiedenen Laststromkreisen 160 im Bordnetz des Kraftfahrzeugs zugeführt. Jeder Laststromkreis 160 versorgt einen oder mehrere Verbraucher mit Strom. Bei einer Leitungslänge eines Laststromkreises von etwa 1 m können diese Leitungen einen geringeren Querschnitt als die Leitung 130 aufweisen, und zwar von ca. 5 mm².

Während der Starter 110 eine sehr hohe Stromaufnahme von bis zu 300A, kurzzeitig sogar bis zu 600A, aufweist, ist die Stromaufnahme aller anderen Verbraucher im Kraftfahrzeug-Bordnetz deutlich geringer. Typische Stromwerte von Verbrauchern im Kraftfahrzeug-Bordnetz reichen von etwa 1,5 A für Standlicht aller Leuchten, 3 A für das Bremslicht und Blinklicht, 8 A für den Scheibenwischer und 8,5 A für Nebel- und Fernscheinwerfer über 10 A für Abblendlicht und das Innenraumgebläse einer Klimaanlage, 18 A für die Motorsteuerung mit Kraftstoffpumpe und 20 A für die Sitzheizung bis hin zu einem elektrischen PTC-Zuheizer mit einer Stromaufnahme im Bereich von etwa 100 A.

Alle Lastkreise 160 sind durch eine Überstromschutzeinrichtung gegen einen Kurzschluss gesichert, so dass die Stromzufuhr zu dem jeweiligen Laststromkreis unterbrochen wird, sobald ein Kurzschluss auftritt. Dadurch wird eine thermische Überhitzung der Kabel- und Steckverbinder in dem jeweiligen Lastkreis verhindert.

Aufgabe der Erfindung ist es, die einzelnen Verbraucherlastkreise besser gegen Überlast zu schützen.

Diese Aufgabe wird mit den Merkmalen der unabhängigen Patentansprüche gelöst.

Gemäß einem ersten Aspekt der vorliegenden Erfindung wird ein elektronischer Stromverteiler für ein Kraftfahrzeug-Bordnetz angegeben. Der elektronische Stromverteiler dient zur steuerbaren elektrischen Verbindung wenigstens eines Lastkreises mit dem Bordnetz. Der elektronische Stromverteiler enthält eine Überwachungseinrichtung zur Überwachung des in den Lastkreis fließenden Stroms und zur Unterbrechung der elektrischen Verbindung, sobald der überwachte Strom einen vorgegebenen Wert überschreitet.

Gemäß einem weiteren Aspekt der vorliegenden Erfindung wird ein Verfahren zur elektrischen Verbindung wenigstens eines Lastkreises mit dem Kraftfahrzeug-Bordnetz angegeben. Das Verfahren überwacht den in den Lastkreis fließenden Strom, vergleicht den erfassten Strom des überwachten Lastkreises mit einem vorgegebenen Wert und unterbricht die elektrische Verbindung, sobald der überwachte Strom den vorgegebenen Wert überschreitet.

Es ist der besondere Ansatz der vorliegenden Erfindung, einen Überlastschutz jedes Lastkreises durch eine aktive Überwachung des in einen Lastkreis fließenden Stroms bereitzustellen. Durch eine aktive Überwachung des in einen Lastkreis fließenden Stroms kann ein beliebiges Sicherungsverhalten realisiert werden.

Ein besonderer Vorteil der vorliegenden Erfindung ist, dass der Abschaltvorgang reversibel ist. Im Kurzschlussfall wird die elektrische Verbindung zu dem betroffenen Lastkreis unterbrochen. Nachdem die Störung behoben ist, kann dieser Lastkreis ohne Austausch einer Hardwarekomponente, z.B. einer Schmelzsicherung, wieder an das Bordnetz angeschlossen werden.

Mit einer aktiven Stromüberwachung lässt sich außerdem ein schnelleres Ansprechverhalten im Kurzschlussfall realisieren. Sehr hohe Kurzschlussströme fließen in der Regel nur für wenige Millisekunden. Durch das schnellere Ansprechverhalten kann verhindert werden, dass die Lastkreise mit größeren Leitungsquerschnitten ausgelegt werden müssen, um für den Kurzschlussfall gewappnet zu sein. Gemäß der vorliegenden Erfindung können Zuleitungen und Steckverbinder im jeweiligen Lastkreis für sehr viel geringere Ströme ausgelegt werden, da der Überlaststrom zuverlässig begrenzt werden kann.

Vorzugsweise ist zur steuerbaren elektrischen Verbindung des Lastkreises mit dem Bordnetz ein Halbleiterschalter eingesetzt. Solche Halbleiterschalter können schnell und bei geringem Platzbedarf nahezu verlustlos einen Lastkreis zu- und abschalten.

Gemäß einer vorteilhaften Ausführungsform der Erfindung wird der Wert des erfassten Stroms, der in den Lastkreis fließt, einer Steuereinheit zur Überwachung und Auslösung einer Unterbrechung der Stromzufuhr zugeführt. In einer solchen Steuereinheit lässt sich das Sicherungsverhalten in Abhängigkeit von dem erfassten Stromwert in beliebiger Weise realisieren.

Vorzugsweise erfasst der Halbleiterschalter den in den Lastkreis fließenden Strom und gibt ein entsprechendes Signal aus. Für eine solche Stromüberwachung lassen sich in einfacher Weise "Smart-Power-Halbleiterschalter" einsetzen. Vorzugsweise gibt der Halbleiterschalter ein Stromsignal aus, das über einen elektrischen Widerstand zur Zuführung zu der Steuereinheit in eine Spannung umgesetzt wird. Vorzugsweise wird das Spannungssignal über einen A/D-Wandler in einen digitalen Wert für die Steuereinheit umgewandelt.

Gemäß einer bevorzugten Ausführungsform wird die elektrische Verbindung nicht unterbrochen, wenn der vorgegebene Wert nur kurzzeitig überschritten wird. Mit dieser Maßnahme werden kurze Überströme, z.B. beim Anlauf eines Motors oder Einschalten von Lampen oder elektrischen Zuheizern nicht als Kurzschlussereignis gewertet. Während eine Schmelzsicherung zur Bewältigung dieses Überlastproblems auf einen Ansprechstrom dimensioniert ist, der etwa dem zweifachen Nennstrom entspricht, kann die elektronische Absicherung gemäß der vorliegenden Erfindung einen derartigen Überstrom schon an seinem Zeitverhalten erkennen.

Vorzugsweise wird die Stromzufuhr bei Überschreitung des vorgegebenen Wertes erst nach zusätzlichem Ablauf eines Zeitkriteriums die elektrische Verbindung unterbrochen. Es ist der besondere Vorteil dieser Erfindung, dass Leitungsquerschnitte und Steckverbinder nur auf den Nennstrom des jeweiligen Lastkreises und nicht auf ein Vielfaches des Nennstroms ausgelegt werden müssen. Dadurch lassen sich Bordnetze kostengünstiger und insbesondere mit geringerem Gewicht als herkömmlich realisieren.

Gemäß einer weiteren vorteilhaften Ausführungsform ist der vorbestimmte Wert, bei dem eine Abschaltung erfolgt, abhängig von der jeweiligen Umgebungstemperatur. Vorzugsweise ist der Abhängigkeit des vorgegebenen Grenzwertes von der erfassten Umgebungstemperatur so eingestellt, dass bei niedrigen Temperaturen höhere Ströme in den Leitungen zugelassen werden.

Gemäß einer weiteren vorteilhaften Ausführungsform wird die elektrische Verbindung des Lastkreises durch ein externes Steuersignal unterbrochen. Auf diese Weise kann bei der Erkennung von Störungen in einem Verbraucher des Lastkreises der entsprechende Stromkreis rechtzeitig unterbrochen werden. So können beispielsweise durchlegierte Leistungshalbleiter eines Steuergerätes, d.h. Halbleiter, die sich nicht mehr ausschalten lassen, erkannt und rechtzeitig außer Betrieb gesetzt werden. Damit wird die Gefahr thermischer Überhitzungen einzelner Bauteile eines Kraftfahrzeugs und die damit verbundene Gefahr für das gesamte Kraftfahrzeug deutlich vermindert.

Weitere vorteilhafte Ausgestaltungen sind Gegenstand der Unteransprüche.

Im Folgenden wird die vorliegende Erfindung anhand bevorzugter Ausführungsformen im Zusammenhang mit den beiliegenden Zeichnungen erläutert. Dabei zeigen die Zeichnungen im Einzelnen:

Fig. 1      den Aufbau eines herkömmlichen Kraftfahrzeug-Bordnetzes;

Fig. 2      den Aufbau eines erfindungsgemäßen Kraftfahrzeug-Bordnetzes;

Fig. 3      einen detaillierten Aufbau eines erfindungsgemäßen KraftfahrzeugBordnetzes gemäß der vorliegenden Erfindung und

Fig. 4      eine elektrische Ersatzschaltung für eine herkömmliche Autobatterie.

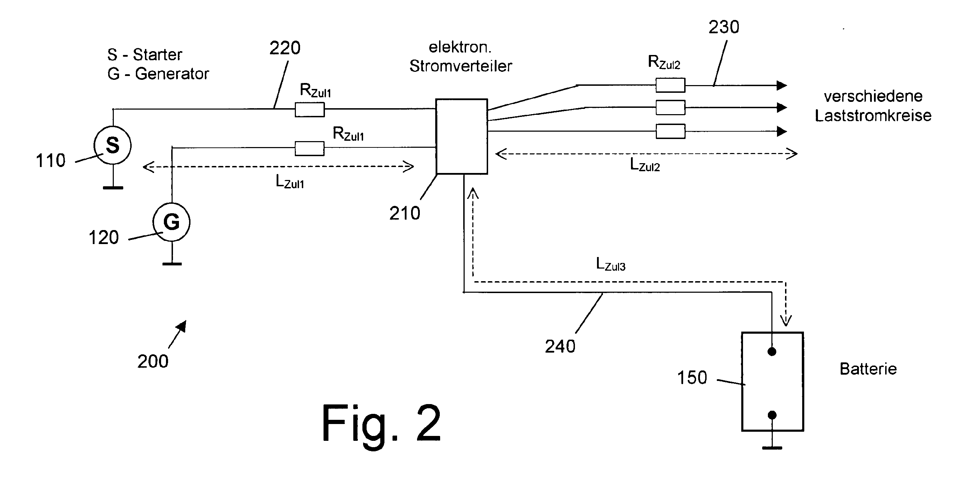

Fig. 2 zeigt in schematischer Weise den Aufbau eines erfindungsgemäßen Kraftfahrzeug-Bordnetzes. Ein Starter 110 und ein Generator 120 sind über separate Zuleitungen 120 mit einem elektronischen Stromverteiler 210 verbunden. Mit dem elektronischen Stromverteiler ist ebenfalls eine Batterie 150 über eine Zuleitung 240 verbunden. Während der Generator 120 während des Betriebs des Kraftfahrzeugmotors elektrischen Strom dem Kraftfahrzeug-Bordnetz 200 bereitstellt, speichert die Batterie 150 während des Betriebs des Motors die von dem Generator 120 bereitgestellte Energie. Um den Motor in Betrieb zu setzen, wird über eine chemische Reaktion in der Batterie 150 elektrische Energie erzeugt und dem Starter 110 zugeführt.

Der Stromverteiler 210 schaltet steuerbar einzelne Laststromkreise 230 an das Kraftfahrzeug-Bordnetz.

Anders als bei herkömmlichen Kraftfahrzeug-Bordnetzen 100 kann die Batterie 150 in dem erfindungsgemäßen Bordnetz 200 beliebig im Kraftfahrzeug positioniert werden, ohne dass Leitungsverbindungen mit großen Leitungsquerschnitten verwendet werden müssen. Während bei einem herkömmlichen Bordnetz 100 gemäß Fig. 1 eine Zuleitung 130 mit einer Länge $L_{Zul1}$ von etwa 1 m einen Querschnitt von 25 mm$^2$ aufweist, weisen die erfindungsgemäßen Zuleitungen 220 bei gleicher Länge nur noch eine Querschnittsfläche von in etwa 5 mm$^2$ auf. Die von dem Stromverteilpunkt ausgehenden Laststromkreise weisen bei einer Länge $L_{Zul2}$ von etwa 1 m einen Querschnitt von 5 mm$^2$ auf.

Bei Anordnung der Batterie 150 in der Nähe des Stromverteilpunkts 140 im Motorraum weist auch die elektrische Verbindung der Batterie mit dem Stromverteilpunkt einen Querschnitt von etwa 5 mm$^2$ bei einer Länge $L_{Zul3}$ von maximal etwa 1 m auf.

Alternativ ist die Batterie mit dem Stromverteilpunkt im Heck eines Kraftfahrzeugs angeordnet. Bei dieser Anordnung sind in einem herkömmlichen Bordnetz 100 alle Verbindungsleitungen zu und von dem Stromverteilpunkt 140 bzw. der Batterie 150 erheblich länger. Gleichzeitig müssen die Leitungsquerschnitte erhöht werden, um bei größerer Leitungslänge mit einem entsprechend höheren Widerstand eine Wärmeentwicklung in den Leitungen zu vermeiden. Aus diesem Grund vergrößert sich herkömmlicher Weise der Querschnitt der Leitungen 130 bei einer Länge $L_{Zul1}$ von ca. 4 m auf ungefähr 95mm$^2$ und der Leitungsquerschnitt der Leitungen der Lastkreise 160 bei einer Länge $L_{Zul2}$ von bis etwa 5 m auf ungefähr 25 mm$^2$.

Erfindungsgemäß können diese Querschnitte erheblich vermindert werden. Zu diesem Zweck werden der elektronische Stromverteiler 210 und die Batterie 150 räumlich voneinander getrennt angeordnet. Gleichzeitig wird die von einer herkömmlichen Batterie ausgeübte Pufferfunktion zum Ausgleich von Spannungsschwankungen des Generators 120 in den elektronischen Stromverteiler 210 verlagert. Bei dieser Anordnung können alle Leitungen bei einer Länge von maximal etwa 1 m einen Querschnitt in der Größenordnung von 5 mm$^2$ aufweisen. Nur bei einer Anordnung der Batterie 150 im Heck eines Kraftfahrzeugs, wobei der elektronische Stromverteiler 210 im Motorraum des Kraftfahrzeugs belassen wird, ist eine längere Leitungsverbindung zwischen elektronischem Stromverteiler 210 und der Batterie 150 erforderlich. Bis zu einer Länge $L_{Zul3}$ von etwa von etwa 4 m beträgt der Leitungsquerschnitt etwa 25 mm$^2$.

Eine weitere Reduzierung der Leitungsquerschnitte ist in Abhängigkeit von der jeweiligen Anwendung dadurch möglich, dass erfindungsgemäß eine aktive Stromüberwachung zur Steuerung des Sicherungsverhaltens im Stromverteiler 210 durchgeführt wird. Die aktive Überwachung des in einen Lastkreis 230 fließenden Stromes erlaubt, bei einem bestimmten Zeitverhalten, insbesondere bei einer schnellen Zunahme über einen vorbestimmen Wert, den Lastkreis abzuschalten.

Im Gegensatz dazu wird der Querschnitt herkömmlicher Leitungen regelmäßig auf den doppelten Nennstrom ausgelegt, um kurze Stromspitzen im Lastkreis ohne thermische Überlastung der Leitungen verkraften zu können. Die erfindungsgemäße Stromüberwachung mit Hilfe einer mikroprozessorgesteuerten Steuereinheit erlaubt, den Überlastschutz exakter an kurzen Überlastspitzen und das Kurzschlussverhalten anzupassen. Damit kann in einfacher Weise der Querschnitt und damit das Gewicht und die Kosten des Kraftfahrzeug-Bordnetzes reduziert werden.

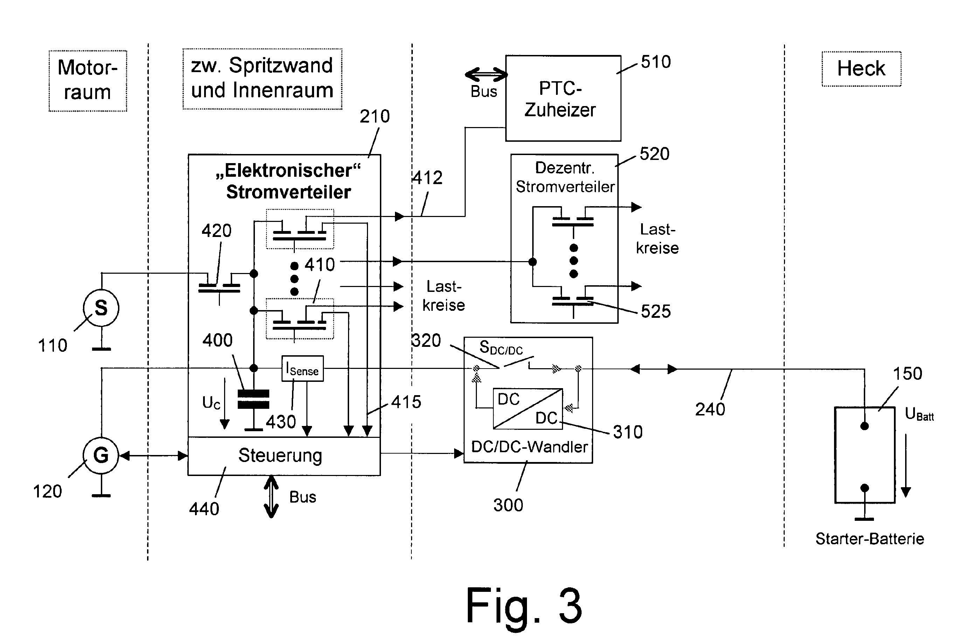

Weitere Details des erfindungsgemäßen Bordnetzes sind in Fig. 3 dargestellt. Bei der in Fig. 3 dargestellten Ausführungsform ist die Batterie 150 vorzugsweise im Heck des Fahrzeugs angeordnet.

Der elektronische Stromverteiler 210 enthält eine Mehrzahl von Halbleiterschaltern 410, die die einzelnen Lastkreise 412 steuerbar mit dem Kraftfahrzeug-Bordnetz verbinden, d.h. eine Stromzufuhr zu den einzelnen Lastkreisen zu- oder abschalten. Für solche Halbleiterschalter werden insbesondere Halbleiterschalter mit einer Smart-Power-Control verwendet. Ein solcher Halbleiterschalter, beispielsweise der Baustein 98 0268 der Firma "International I.R. Rectifier" misst den in den zugeschalteten Lastkreis fließenden Strom. Bei dem angegebenen Halbleiterbaustein wird ein dem gemessenen Strom proportionaler Strom über einen separaten Anschluss ausgegeben. Der von jedem Halbleiterschalter 410 gemessene Strom wird einer Steuerung 440 des elektronischen Stromverteilers zugeführt. Diese Steuerung, die entweder innerhalb des elektronischen Stromverteilers 210 oder separat davon angeordnet ist, überwacht für jeden Lastkreis individuell den zulässigen Strom.

Der für jeden Lastkreis zulässige Stromwert ist vorzugsweise für jeden Lastkreis 412 separat in der Steuerung 440 einstellbar. Gemäß einer bevorzugten Ausführungsform sind in der Steuerung 440 unterschiedliche Stromhöhen und unterschiedliche "Auslöse"-Charakteristika vorgesehen, die für jeden Lastkreis 412 separat auswählbar sind. Sobald der für einen Lastkreis 412 gemessene Strom den für ihn festgelegten Maximalwert unter Berücksichtigung eines zulässigen Überstroms überschreitet, veranlasst die Steuerung 440, dass der Halbleiterschalter 410 die elektrische Verbindung unterbricht.

Mit einem solchen Hableiterschalter ist ein reversibler Abschaltvorgang möglich, bei dem der Lastkreis ohne Austausch beispielsweise einer Schmelzsicherung wieder in Betrieb genommen werden kann. Außerdem ermöglicht die aktive Stromüberwachung ein schnelles Ansprechen im Kurzschussfall. Sehr hohe Kurzschlussströme fließen daher nur für wenige Millisekunden. Deshalb müssen die Leitungen und Steckverbinder des jeweiligen Lastkreises nicht auf einen Kurzschlussfall ausgelegt werden, bei dem für eine deutlich längere Zeit ein hoher Strom fließt.

Die "intelligente" Überwachung des jeweiligen Laststroms in der Steuerung 440 erlaubt, kurze Überströme zuzulassen, ohne dass die elektrische Verbindung zur Stromzuführung zu dem Lastkreis unterbrochen wird. Das Ansprechverhalten kann dadurch individuell gestaltet werden, insbesondere an die Funktion und den Strombedarf (und kurzzeitigen Überstrombedarf) des jeweiligen Lastkreises angepasst werden. Dabei müssen kurze Überströme beim Anlauf eines Motors oder beim Einschalten von Lampen, Zuheizern usw. berücksichtigt werden.

Die Schutzfunktion soll verhindern, dass Überströme bzw. Kurzschlüsse in den Laststromkreisen auftreten und zu einer thermischen Überlastung der Leitungen und Steckverbinder führen. Die thermische Überlastung wird durch die umgesetzte Energie bewirkt, d.h. Stromhöhe multipliziert mit der Zeit, für die der Überstrom anliegt. Es kann durchaus zulässig sein, für eine Sekunde den zehnfachen Nennstrom in einen Lastkreis fließen zu lassen, ohne dass eine Beschädigung auftritt. Ein solcher Überstrom muss von der Steuerung 440 als unproblematisch erkannt werden. Eine Schmelzsicherung dagegen würde bei einem solchen Überstrom eine Unterbrechung herbeiführen und den Strom irreversibel (bis zum Austausch der Sicherung) unterbrechen.

Kurzzeitige Überströme mit einem mehrfachen Wert des Nennstroms treten beispielsweise beim Einschalten eines Elektromotors auf. Beim Anfahren eines Elektromotors kann der Rotor anfänglich etwas schwergängig sein oder klemmen, insbesondere bei tiefen Umgebungstemperaturen. Ein Überstrom, der einem Mehrfachen des Nennstroms entspricht, tritt für einige 100 ms auf. Auch bei elektrischen PTC-Zuheizern, die zur Erwärmung der in den Kraftfahrzeuginnenraum geblasenen Luft verwendet werden, können beim Einschalten innerhalb eines Zeitintervalls von ca. 10 Sekunden Ströme auftreten, die dem Doppelten des Nennstroms entsprechen. Aufgrund des extrem kurzzeitigen Auftretens solcher Überströme sind diese für die Leitungen und Steckverbinder unproblematisch.

Eine herkömmliche Schmelzsicherung ist in der Regel auf einen Ansprechstrom eingestellt, der größer als das Doppelte des Nennstroms ist. Eine solche herkömmliche Sicherung würde aber auch einen dauernden Überstrom akzeptieren, der dem 1,8-fachen des Nennstroms entspricht. Im Gegensatz dazu kann eine elektronische Absicherung gemäß der vorliegenden Erfindung einen derartigen Überstrom erkennen und nach Überschreiten des Zeitkriteriums, beispielsweise 10 Sekunden, die elektrische Verbindung unterbrechen. Der jeweilige Laststromkreis kann daher in seiner Dimensionierung auf den tatsächlichen Nennstrom ausgelegt werden, so dass die Leitungsquerschnitte und der Steckverbinder nicht auf Dauer den doppelten Nennstrom aushalten können müssen.

Die erfindungsgemäße Steuerung 440 lässt sich auch mit Hilfe eines zusätzlichen Temperatursensors an die aktuelle Umgebungstemperatur anpassen. Bei niedrigen Umgebungstemperaturen können aufgrund der verbesserten Kühlung höhere Ströme zugelassen werden. Die Überstromerkennung und Abschaltung eines Lastkreises erfolgt daher vorzugsweise temperaturabhängig, und zwar gemäß einer bevorzugten Ausführungsform über eine vorbestimmte Abhängigkeit zwischen der anzuwendenden Stromobergrenze und der ermittelten Umgebungstemperatur.

Gemäß einer weiter vorteilhaften Ausführungsform kann die Steuerung einen Lastkreis 412 auch in Abhängigkeit von einem externen Signal abschalten. Beispielsweise können Störungen in einem Verbraucher eines Lastkreises über separate Sensoren erkannt und die von diesen ausgehenden Gefahr für das Kraftfahrzeug vorzeitig gebannt werden.

In Fig. 3 sind nur beispielhaft ein PTC-Zuheizer 510 und ein dezentraler Stromverteiler 520 als Verbraucher dargestellt. Der dezentrale Stromverteiler 520 kann über eine Mehrzahl von Halbleiterschaltern 525 ebenfalls untergeordnete Lastkreise zuund abschalten. Diese Lastkreise sind nur beispielhaft. Für den Fachmann ist es selbstverständlich, dass jeder elektrische Verbraucher eines Kraftfahrzeugs über einen solchen Lastkreis 412 direkt, oder indirekt über einen dezentralen Stromverteiler 520, ansteuerbar ist.

In dem elektrischen Stromverteiler 510 ist erfindungsgemäß ein Kondensator 400 hoher Kapazität vorgesehen, der parallel zum Generator 120 und der Batterie 150 geschaltet ist. Der Kondensator 400 besitzt hohe Kapazitätswerte bei geringem Bauvolumen. Für ein Kraftfahrzeug werden vorzugsweise Kapazitäten im Bereich von 450 bis 600 F verwendet. Heutzutage können Doppelschichtkondensatoren sogar Kapazitäten bis zu mehreren tausend F erreichen.

Doppelschichtkondensatoren erreichen eine um ein Vielfaches höhere Energiedichte als Aluminium-Elektrolytkondensatoren und eine mehrfach höhere Leistungsdichte als Bleibatterien. Während in Batterien die elektrische Energie elektrochemisch gespeichert wird, wird die elektrische Energie in einem Kondensator direkt in Form von positiven oder negativen Ladungen auf den Platten des Kondensators gespeichert. Dabei ist keine chemische Reaktion an den Elektrodenoberflächen erforderlich. Solche Doppelschichtkondensatoren, beispielsweise Doppelschichtkondensatoren der Firma EPCOS mit der Bezeichnung "UltraCap" speichern elektrische Energie und geben sie mit hohem Wirkungsgrad wieder ab. Im Unterschied zu Batterien können sie mit sehr hohen Strömen verschleißfrei geladen und entladen werden. Zudem ermöglichen sie eine sichere Funktion auch bei sehr niedrigen Temperaturen und niedrigen Spannungswerten. Sie geben hohe Leistungen verzögerungsfrei und sehr verlustarm bei Entladeströmen mit bis zu 400 A ab.

Durch die Parallelschaltung eines Kondensators 400 mit hoher Kapazität zu dem Generator 120 und der Starterbatterie 51 lassen sich mehrere Vorteile erreichen. Für den Startvorgang ist nicht mehr die Batterie 150 zuständig, sondern der Hochleistungskondensator 400. Der Kondensator 400 wird vor Ausführung des Startvorgangs von der Batterie 150 aufgeladen. Anschließend gibt der Kondensator 400 die gespeicherte Energie an den Starter 110 ab. Der Startvorgang kann damit sicherer ausgestaltet werden, da der Kondensator in der Lage ist, hohe Energiemengen auch kurzzeitig bei niedrigen Temperaturen abzugeben. Im Gegensatz dazu haben herkömmliche Kraftfahrzeuge bei niedrigen Temperaturen häufig Startprobleme, da die in der Batterie 150 ablaufenden chemischen Reaktionen keine großen Ströme zulassen.

Gemäß einer besonders vorteilhaften Ausführungsform der Erfindung lässt sich das Startverhalten weiter verbessern, indem ohne Erhöhung der Kapazität des Kondensators die in ihm gespeicherte Energie erhöht wird. Zu diesem Zweck wird erfindungsgemäß zur Vorbereitung eines Startvorgangs ein Spannungswandler 310 zwischen die Batterie 150 und den Kondensator 400 geschaltet. Der Spannungswandler 310 setzt die von der Batterie gelieferte Spannung 150 in eine höhere Spannung um. Damit kann der Kondensator bei gleicher Kapazität eine sehr viel größere Energiemenge aufnehmen. Die in dem Kondensator gespeicherte Energiemenge lässt sich gemäß der nachfolgenden Gleichung bestimmen:

$$E = 1/2 \cdot C \cdot U^2.$$

Gleichzeitig ist parallel zu dem Spannungswandler 310 in die elektrische Verbindung zwischen der Batterie 150 und dem Kondensator 400 ein Unterbrecher 320 geschaltet. Der Unterbrecher trennt die direkte elektrische Verbindung zwischen der Batterie und dem Kondensator auf, so dass dem Kondensator eine sehr viel höhere Spannung zugeführt werden kann.

Durch die erfindungsgemäße Vorrichtung 300 mit einem Spannungswandler und einem Unterbrecher kann die für einen Startvorgang zur Verfügung stehende Energie in einfacher Weise deutlich erhöht werden. Ein sicheres Starten des Kraftfahrzeugs ist dann auch bei schwacher Batterie mit nur noch geringen Energiereserven weiterhin möglich.

Nachfolgend wird beispielhaft ein Startvorgang beschrieben, bei dem der erfindungsgemäße Spannungswandler verwendet wird.

Bei Stillstand des Kraftfahrzeugs, d.h. Motor und Zündung sind ausgeschaltet, ist der Spannungswandler (DC/DC-Wandler) 310 ausgeschaltet und die elektrische Verbindung zwischen dem elektrischen Stromverteiler 210 und der Batterie 150 wird durch den Schalter 320 hergestellt. Der Kondensator 400 ist damit parallel zur Batterie 150 geschaltet und auf die Batteriespannung $U_{BATT}$ aufgeladen. Bei herkömmlichen Bordnetzen auf eine Spannung von etwa 12,5 V, bei zukünftigen Bordnetzen auf etwa 37,5 V.

Vor dem Startvorgang des Verbrennungsmotors wird der Spannungswandler 310 aktiviert und gleichzeitig der Schalter 320 geöffnet. Vorzugsweise werden, wenn erforderlich, über den elektronischen Stromverteiler 210 einzelne Lastkreise abgeschaltet. Insbesondere werden solche Lastkreise 412 abgeschaltet, die einen hohen Strombedarf besitzen. Die Abschaltung kann gemäß einer besonderen Ausführungsform über die Steuerung 440 auch in Abhängigkeit von der Höhe der Batteriespannung vorgenommen werden, um bei schwacher Batterie ein sicheres Starten zu gewährleisten.

Der Spannungswandler erzeugt nun eine Ausgangsspannung, die an den Kondensator angelegt ist, wobei die Ausgangsspannung oberhalb der Batteriespannung liegt. Bei einer Batteriespannung von 12,5 V beträgt die erhöhte Ausgangsspannung beispielsweise 16 V. Die Spannung liegt damit um 3,5 V oberhalb der Batteriespannung und lädt den Kondensator entsprechend höher auf. Damit ist auch die in dem Kondenstor gespeicherte Energie um etwa 60 % höher als bei einer herkömmlichen Ladespannung von 12,5 V.

Damit stehen auch bei einer schwachen Batterie mit einer Batteriespannung die unterhalb von 12,5 V liegt, ausreichend Energiereserven für den Startvorgang zur Verfügung. Wenn der Spannungswandler den Kondensator 400 immer mit einer Spannung von 16 V auflädt, steht für den Startvorgang immer die gleiche Energiemenge zur Verfügung, unabhängig von der Leistungsfähigkeit der Batterie.

Der durch den Spannungswandler erzielte Vorteil lässt sich entweder in erhöhte Energiereserven für den Startvorgang umsetzen oder zur Reduzierung der Kapazität des Kondensators. Bei gleicher gespeicherter Energiemenge ist dann eine geringe Kapazität des Kondensators 400 für einen sicheren Startvorgang ausreichend.

Eine weitere Erhöhung der Energiemenge im Kondensator 400 lässt sich durch eine weitere Erhöhung der Ladespannung höher als 16 V in herkömmlichen Bordnetzen erreichen. Eine Beschränkung auf eine Ladespannung von 16 V besitzt den Vorteil, dass diese Erhöhung keine weiteren Komplikationen mit anderen elektrischen Komponenten des Bordnetzes nach sich zieht. Heutzutage sind alle elektrischen und elektronischen Komponenten eines Kraftfahrzeug-Bordnetzes auf eine Betriebsspannung von maximal 16 V ausgelegt. Die Ladespannung des Kondensators 400 ist daher vorzugsweise an der Auslegung der elektrischen Komponenten des Bordnetzes und der Spannungsfestigkeit des Kondensators selbst orientiert. Bei zukünftigen Bordnetzen mit einer Systemspannung von 42 V lässt sich der Kondensator auf eine deutlich höhere Spannung aufladen, soweit eine kurzzeitige Spannungserhöhung von den anderen elektrischen Komponenten ohne Probleme verkraftet wird.

Alternativ kann bei besonders hohen Ausgangsspannungen des Spannungswandlers kann über ein Abschalten aller Lastkreise bzw. Verbraucher über die Halbleiterschalter 410 jede Komplikation mit anderen Bordnetz-Komponenten ausgeschlossen und ein besonderes sicherer Startvorgang realisiert werden.

Die Aufladung des Kondensators erfolgt rechtzeitig vor Beginn des Startvorgangs. Zur Einleitung des Aufladevorgangs des Kondensators 400 können mehrere Auslöser herangezogen werden. Beispielsweise kann der Fahrer die Aufladung starten, wenn der Zündschlüssel eingesteckt wird oder das Zündschloss in die Stellung "Zündung EIN" gebracht wird. Alternativ kann der Aufladevorgang durch Öffnen einer Fahrzeugtür ausgelöst werden. Dabei kann das Öffnen einer beliebigen Fahrzeugtür als auch das Öffnen der Fahrer-Fahrzeugtür erfasst und als Auslösesignal für die Aufladung verwendet werden. Wenn die Fahrzeugtür als auslösendes Ereignis für den Beginn des Aufladevorgangs verwendet wird, steht mehr Zeit als bei Erfassung der Zündschlüsselstellung zur Verfügung.

Mit der Zündschlüsselstellung "Starten" wird der Spannungswandler ausgeschaltet. Solange der Startvorgang läuft, bleibt der Unterbrecher 320 geöffnet. Sobald der Verbrennungsmotor selbsttätig läuft, wird der Unterbrecher 320 geschlossen und das Bordnetz wieder auf eine Spannung von ca. 12, 5 V gesetzt.

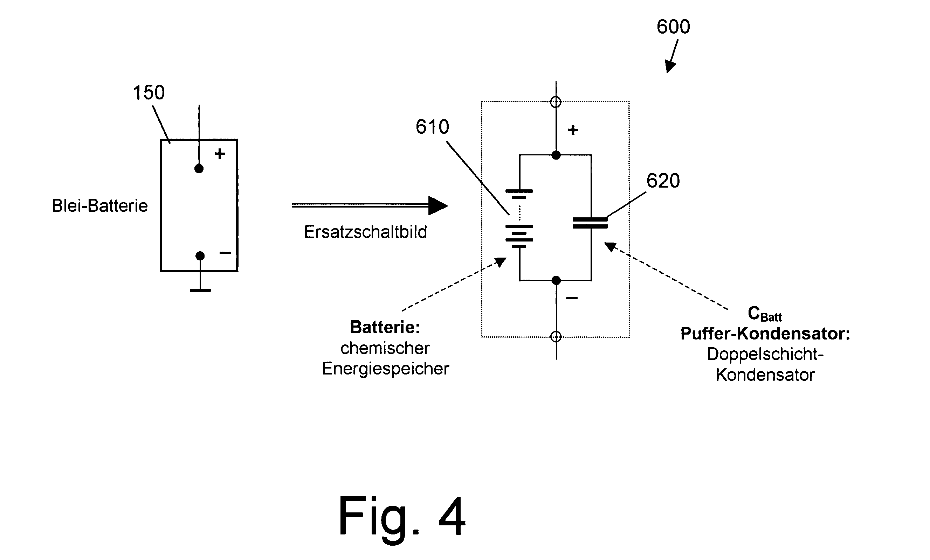

Der Kondensator 400 ermöglicht nicht nur eine Verbesserung des Startvorgangs, sondern kann außerdem die Pufferwirkung der herkömmlichen Batterie 150 übernehmen. Ein Ersatzschaltbild einer herkömmlichen Batterie 150 ist in Fig. 4 dargestellt.

Das Ersatzschaltbild 600 der Batterie 150 zeigt, dass die Batterie nicht nur die Funktion eines chemischen Energiespeichers 610, sondern auch die Funktion eines Pufferkondensator 620 besitzt. Diese Kondensatorwirkung ergibt sich aus dem inneren Aufbau der Bleibatterie.

Die Kondensatorwirkung einer herkömmlichen Batterie wird bisher dazu verwendet, vom Generator 120 herrührende Spannungsschwankungen zu glätten.

Der Generator 120 erzeugt bei laufendem Kraftfahrzeugmotor einen Drehstrom, der mit Hilfe von Dioden gleichgerichtet wird. In heutigen Kraftfahrzeugbordnetzen ist die Batterie 150 räumlich so angeordnet, dass sie zwischen dem Generator 150 und den Verbrauchern in den Lastkreisen 412 liegt. Vor allem wird aus der Kombination der Batteriekapazität $C_{Batt}$ und dem Zuleitungswiderstand der elektrischen Verbindungsleitung zwischen dem Generator 120 und der Batterie 150 $R_{Zul1}$ ein Tiefpass gebildet. Der Tiefpass bewirkt eine Glättung der Spannungsschwankungen des vom Generator erzeugten Stroms.

Erfindungsgemäß wird diese Funktion von dem Kondensator 400 mit hoher Kapazität übernommen.

Während herkömmliche Bordnetze so ausgebildet sind, dass auf den elektrischen Verbindungsleitungen zwischen Generator und Batterie hohe Ströme zum Ausgleich der Spannungsschwankungen fließen können, wird erfindungsgemäß die Funktion der Energiespeicherung und Energiepufferung von getrennten Baueinheiten in dem Kraftfahrzeug-Bordnetz wahrgenommen. Während der Kondensator 400 die Pufferung von Spannungsschwankungen übernimmt, stellt die Batterie 150 die Energie für den Startvorgang bereit. Damit lässt sich die Batterie in einfacher Weise entfernt von dem Generator und dem Stromverteiler positionieren, ohne dass der herkömmliche Aufwand für eine elektrische Leitungsverbindung 240 mit der Batterie erforderlich ist. Im Gegenteil, die Querschnitte können, wie beispielhaft im Zusammenhang mit Fig. 2 beschrieben, auf deutlich kleinere Werte reduziert werden. Damit werden Kraftfahrzeugbordnetze leichter und preisgünstiger.

Die Pufferfunktion wird durch die Anordnungsfolge Generator - Batterie - Stromverteiler - Verbraucher in Verbindung mit dem sich einstellenden Tiefpaß erreicht. Der Tiefpaß wird aus dem Zuleitungswiderstand $R_{Zul1}$ zwischen dem Generator und der Batterie einerseits und der Kapazität $C_{Batt}$ der Batterie andererseits gebildet. Ein geringerer Leitungsquerschnitt bewirkt zudem einen höheren Zuleitungswiderstand $R_{Zul1}$ und verbessert damit die Tiefpasswirkung aufgrund der Gleichung für die Zeitkonstante Tau des Tiefpasses:

$$Tau = R_{Zul1} \cdot C_{Batt}$$

Zusammenfassend hat das erfindungsgemäße neue Kraftfahrzeug-Bordnetz eine Vielzahl von Vorteilen gegenüber herkömmlichen Bordnetzen. Die Starterbatterie übernimmt nicht mehr die Startfunktion, ist einer geringeren Impuls- und Strombelastung ausgesetzt, muss nur noch reduzierte Anforderungen hinsichtlich des Tieftemperaturverhaltens erfüllen und kann eine Batterie mit reduzierter Speicherkapazität sein. Mit Hilfe eines Spannungswandlers lässt sich die Energie und damit die Startsicherheit erhöhen. Die Leitungen weisen nur noch einen geringeren Querschnitt auf, so dass Kosten und Gewichtsvorteile erzielt werden, insbesondere bei der Anordnung der Batterie im Heck des Kraftfahrzeugs.

## Patentansprüche

1. Elektronischer Stromverteiler für ein Kraftfahrzeug-Bordnetz zur steuerbaren elektrischen Verbindung wenigstens eines Lastkreises (412) mit dem Bordnetz, **gekennzeichnet durch** eine Überwachungseinrichtung zur Überwachung des in den Lastkreis (412) fließenden Stroms und zur Unterbrechung der elektrischen Verbindung, sobald der überwachte Strom einen vorgegebenen Wert überschreitet.

2. Elektronischer Stromverteiler nach Anspruch 1 mit einem Halbleiterschalter (410) zur steuerbaren Verbindung des Lastkreises (412) mit dem Bordnetz.

3. Elektronischer Stromverteiler nach Anspruch 1 oder 2 mit einer Steuereinheit (440), der der erfasste Strom des Lastkreises zugeführt wird, zur Überwachung des erfassten Stromwertes im Vergleich zu dem vorgegebenen Wert und zur Steuerung der Unterbrechung.

4. Elektronischer Stromverteiler nach Anspruch 3, wobei die Steuereinheit (440) zur Unterbrechung der elektrischen Verbindung den Halbleiterschalter (410) entsprechend ansteuert.

5. Elektronischer Stromverteiler nach Anspruch 4, wobei der Halbleiterschalter (410) ein dem erfassten Strom des Lastkreises (412) proportionales Signal abgibt.

6. Elektronischer Stromverteiler nach Anspruch 5, wobei das von dem Halbleiterschalter (410) erfasste Signal ein Stromsignal ist und der elektronische Stromverteiler weiterhin einen elektrischen Widerstand zur Umwandlung des Stromsignals in eine Spannung aufweist.

7. Elektronischer Stromverteiler nach Anspruch 6, mit einem A/D-Wandler zur Umwandlung der Spannung in einen digitalen Wert und zur Zuführung des digitalen Wertes zu der Steuereinheit (440).

8. Elektronischer Stromverteiler nach einem der Ansprüche 1 bis 7, wobei die steuerbare elektrische Verbindung für eine wiederholte Verbindung und Unterbrechung ausgebildet ist.

9. Elektronischer Stromverteiler nach einem der Ansprüche 1 bis 8, wobei die Überwachungseinrichtung bei kurzzeitiger Überschreitung des vorgegebenen Wertes die elektrische Verbindung nicht unterbricht.

10. Elektronischer Stromverteiler nach Anspruch 9, wobei eine Unterbrechung erst dann erfolgt, wenn eine Überschreitung des vorgegebenen Wertes länger als eine vorgegebenen Zeitdauer andauert.

11. Elektronischer Stromverteiler nach einem der Ansprüche 1 bis 10, wobei die Überwachungseinrichtung zur sicheren Erkennung und Unterbrechung im Kurzschlussfall ausgelegt ist.

12. Elektronischer Stromverteiler nach einem der Ansprüche 1 bis 11, wobei der vorgegebene Stromwert temperaturabhängig ist und vorzugsweise mit zunehmender Umgebungstemperatur abnimmt.

13. Elektronischer Stromverteiler nach einem der Ansprüche 1 bis 12, wobei die elektrische Verbindung auch durch ein externes Signal unterbrechbar ist.

14. Kraftfahrzeug-Bordnetz mit einem elektronischen Stromverteiler (210) nach einem der Ansprüche 1 bis 13.

15. Verfahren zur elektrischen Verbindung wenigstens eines Lastkreises (412) mit einem Kraftfahrzeug-Bordnetz **gekennzeichnet durch** die Schritte:

   Überwachen des in den Lastkreis (412) fließenden Stroms,

   Vergleichen des erfassten Stroms des überwachten Lastkreises (412) mit einem vorgegebenen Wert und

   Unterbrechen der elektrischen Verbindung, sobald der überwachte Strom den vorgegebenen Wert überschreitet.

16. Verfahren nach Anspruch 15, wobei für eine steuerbare elektrische Verbindung ein Halbleiterschalter (410) verwendet wird.

17. Verfahren nach Anspruch 16, wobei die Überwachung des in den Lastkreis fließenden Stroms von dem Halbleiterschalter (410) durchgeführt wird.

18. Verfahren nach Anspruch 16 oder 17, wobei der Halbleiterschalter (410) ein dem erfassten Strom des Lastkreises (412) proportionales Signal abgibt.

19. Verfahren nach Anspruch 18, wobei das von dem Halbleiterschalter (410) erfasste Signal ein Stromsignal ist, das über einen elektrischen Widerstand in ein Spannungssignal umgewandelt wird.

20. Verfahren nach Anspruch 19, wobei das Spannungssignal in ein digitales Signal umgesetzt wird.

21. Verfahren nach einem der Ansprüche 15 bis 20, wobei die steuerbare elektrische Verbindung wiederholt trenn- und herstellbar ist.

22. Verfahren nach einem der Ansprüche 17 bis 21, wobei vor Auslösung der Unterbrechung die Zeitdauer der Überschreitung erfasst und eine Unterbrechung der elektrischen Verbindung erst nach Überschreiten einer vorbestimmten Zeitgrenze durchgeführt wird.

23. Verfahren nach einem der Ansprüche 15 bis 22, wobei ein zulässiges Überschreiten des vorgegebenen Wertes so ausgelegt ist, dass eine sichere Erkennung und Unterbrechung im Kurzschlussfall durchgeführt wird.

24. Verfahren nach einem der Ansprüche 15 bis 23, wobei der vorgegebene Stromwert temperaturabhängig ist und vorzugsweise mit zunehmender Umgebungstemperatur abnimmt.

25. Verfahren nach einem der Ansprüche 15 bis 24, wobei die elektrische Verbindung in Abhängigkeit von einem von außen zugeführten Signal unterbrochen wird.

Fig. 1

S - Starter
G - Generator

220

elektron.
Stromverteiler

230

$R_{Zul2}$

$R_{Zul1}$

verschiedene
Laststromkreise

110

$R_{Zul1}$

$L_{Zul1}$

$L_{Zul2}$

210

120

200

$L_{Zul3}$

240

150

Batterie

# Fig. 2

Fig. 3

600

150

610

620

Blei-Batterie

Ersatzschaltbild

+

−

**Batterie:**
chemischer
Energiespeicher

$C_{Batt}$
**Puffer-Kondensator:**
Doppelschicht-
Kondensator

EP 1 564 077 A1

# Fig. 4

**EP 1 564 077 A1**

**Europäisches Patentamt**

# EUROPÄISCHER RECHERCHENBERICHT

Nummer der Anmeldung

EP 04 00 3413

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 02/051668 A (JUNTUNEN ASKO ; LAMBERG LAURI (FI); IWS INTERNAT OY (FI)) 4. Juli 2002 (2002-07-04) | 1-11, 13-23,25 | B60R16/02 |
| Y | * Seite 2, Zeile 22 - Seite 4, Zeile 28; Abbildung 1 * * Zusammenfassung * ----- | 12,24 | |
| E | WO 2004/028862 A (LEIBER HEINZ ; INTEDIS GMBH & CO KG (DE)) 8. April 2004 (2004-04-08) * Seite 4, Zeile 12 - Seite 5, Zeile 14; Abbildung 1 * * Zusammenfassung * ----- | 1-4, 6-11,14, 15, 21-23,25 | |
| Y | US 2002/027758 A1 (BURRUS PHILIP HENRY ET AL) 7. März 2002 (2002-03-07) * Absatz [0017]; Abbildung 1 * * Zusammenfassung * ----- | 12,24 | |
| A | DE 198 38 958 A (BOSCH GMBH ROBERT) 2. März 2000 (2000-03-02) * Spalte 1, Zeile 45 - Spalte 2, Zeile 29; Abbildung 1 * * Zusammenfassung * ----- | 1-25 | RECHERCHIERTE SACHGEBIETE (Int.Cl.7) B60R |

Der vorliegende Recherchenbericht wurde für alle Patentansprüche erstellt

| Recherchenort | Abschlußdatum der Recherche | Prüfer |
|---|---|---|
| München | 30. Juli 2004 | Bronold, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

13

**ANHANG ZUM EUROPÄISCHEN RECHERCHENBERICHT**
**ÜBER DIE EUROPÄISCHE PATENTANMELDUNG NR.**                    EP 04 00 3413

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-07-2004

| Im Recherchenbericht angeführtes Patentdokument | | Datum der Veröffentlichung | Mitglied(er) der Patentfamilie | | Datum der Veröffentlichung |
|---|---|---|---|---|---|
| WO 02051668 | A | 04-07-2002 | FI | 20002834 A | 25-09-2002 |
| | | | EP | 1345795 A1 | 24-09-2003 |
| | | | WO | 02051668 A1 | 04-07-2002 |
| | | | US | 2004052024 A1 | 18-03-2004 |
| WO 2004028862 | A | 08-04-2004 | DE | 10243970 A1 | 01-04-2004 |
| | | | WO | 2004028862 A1 | 08-04-2004 |
| US 2002027758 | A1 | 07-03-2002 | US | 6300750 B1 | 09-10-2001 |
| | | | AU | 2437201 A | 25-06-2001 |
| | | | WO | 0145226 A1 | 21-06-2001 |
| | | | CN | 1334630 A | 06-02-2002 |
| | | | EP | 1148612 A2 | 24-10-2001 |
| | | | CN | 1327603 T | 19-12-2001 |
| | | | EP | 1145264 A1 | 17-10-2001 |
| | | | WO | 0131665 A1 | 03-05-2001 |
| | | | US | 6340878 B1 | 22-01-2002 |
| | | | US | 6631066 B1 | 07-10-2003 |
| | | | TW | 554604 B | 21-09-2003 |
| | | | WO | 0148578 A1 | 05-07-2001 |
| | | | US | 6320363 B1 | 20-11-2001 |
| DE 19838958 | A | 02-03-2000 | DE | 19838958 A1 | 02-03-2000 |
| | | | FR | 2782854 A1 | 03-03-2000 |
| | | | JP | 2000092690 A | 31-03-2000 |
| | | | US | 6381111 B1 | 30-04-2002 |

EPO FORM P0461

Für nähere Einzelheiten zu diesem Anhang : siehe Amtsblatt des Europäischen Patentamts, Nr.12/82